# EUROPÄISCHE PATENTSCHRIFT

(11) **EP 2 493 899 B1**
(45) Veröffentlichungstag und Bekanntmachung des Hinweises auf die Patenterteilung: **02.05.2018**
(21) Anmeldenummer: 10773301.6
(22) Anmeldetag: 29.10.2010
(51) Int. Cl.: C07F 7/00, C08G 18/24, C07C 215/10, B01J 31/02

(54) **VERFAHREN ZUR HERSTELLUNG VON METALLVERBINDUNGEN**
METHOD FOR PRODUCING METAL COMPOUNDS
PROCÉDÉS DE PRODUCTION DE COMPOSÉS MÉTALLIQUES

(30) Priorität: 30.10.2009 EP 09174652
(43) Veröffentlichungstag der Anmeldung: 05.09.2012
(73) Patentinhaber: TIB Chemicals AG, 68219 Mannheim (DE); Covestro Deutschland AG, 51373 Leverkusen (DE)
(72) Erfinder: LEHMANN, Frank, 67373 Dudenhofen (DE); KITTELMANN, Udo, 63322 Rödermark (DE)
(74) Vertreter: Rippel, Hans Christoph
(86) Internationale Anmeldenummer: PCT/EP2010/066502
(87) Internationale Veröffentlichungsnummer: WO 2011/051465

(56) Entgegenhaltungen:
- EP-A1- 1 108 752
- DD-A1- 242 617
- DE-A1-102008 021 980
- GB-A- 899 948
- TZSAHACH, A. ET AL.: "Zur Reaktivität von intermolekular basenstabilisierten Zinn(II)-Verbindungen mit Halogenen, Zinntetrachlorid und Chloroform", Z. ANORG. ALLG. CHEMIE, Bd. 512, 1984, Seiten 177-80, XP002616788,

## Beschreibung

Die vorliegende Erfindung betrifft Verfahren zur Herstellung von Metallverbindungen, die insbesondere als Katalysatoren zur Herstellung von Polyestern, Polyurethanen oder Polysiloxanen geeignet sind. Polyurethane sind seit langem bekannt und werden in vielfältigen Bereichen eingesetzt. Häufig muss bei der Herstellung der Polyurethane die eigentliche Polyurethanreaktion unter Verwendung von Katalysatoren durchgeführt werden, da sonst die Reaktion zu langsam abläuft und gegebenenfalls zu Polyurethanprodukten mit schlechten mechanischen Eigenschaften führt. In den meisten Fällen muss die Reaktion zwischen der Hydroxylkomponente und der NCO-Komponente katalysiert werden.

Bei den gebräuchlichen Katalysatoren wird allgemein zwischen metallhaltigen und nichtmetallhaltigen Katalysatoren unterschieden. Typische gebräuchliche Katalysatoren sind beispielsweise Aminkatalysatoren, wie etwa 1,8-Diazabicyclo[5.4.0]undec-7-en (DBU), 1,4-Diazabicyclo[2.2.2]octan (DABCO) oder Triethanolamin. Bei den metallhaltigen Katalysatoren handelt es sich meist um Lewissäureverbindungen, wie Dibutylzinn- bzw. Dioctylzinnverbindungen, Zinkoctoat, Bleioctoat, Zinnoctoat, Titan- und Zirkonkomplexen, aber auch Cadmium-, Bismuth- (beispielsweise Bismuthneodecanoat) und Eisenverbindungen.

Eine Anforderung an den Katalysator ist, dass dieser möglichst definiert nur eine der vielfältigen Polyurethanreaktionen katalysiert, wie etwa ausschließlich die Reaktion zwischen OH- und NCO-Gruppen. Nebenreaktionen, wie zum Beispiel Di- oder Trimerisierungen des Isocyanates, Allophanatisierungen, Biuretisierungen, Wasserreaktionen oder Harnstoffbildungen sollen hierbei nicht katalysiert werden. Die Anforderung geht dahin, dass ein optimaler Katalysator exakt die Reaktion katalysiert, die gerade gewünscht ist; beispielsweise nur die Wasserreaktion, so dass ein definiertes Schäumprofil entsteht oder, wie bei Verwendung der Kaliumacetate, bevorzugt die Polyisocyanatreaktion.

Derzeit gibt es jedoch kaum Katalysatoren, die nur eine definierte Reaktion katalysieren. Dies wäre jedoch gerade hinsichtlich der vielfältigen Reaktionsmöglichkeiten bei der Polyurethanherstellung äußerst wünschenswert. Besonders interessant sind daher nicht nur Katalysatoren, die definiert nur eine Reaktion katalysieren, sondern auch Katalysatoren, die zusätzlich gezielt aktiv werden und nur unter bestimmten Bedingungen spezielle Reaktionen katalysieren. In solchen Fällen spricht man von schaltbaren Katalysatoren. Diese schaltbaren Katalysatoren werden wiederum in thermisch-, photochemisch- oder optisch schaltbare unterteilt. Allgemein wird hierbei auch von latenten Katalysatoren gesprochen und im thermischen Fall von thermo latenten Katalysatoren. Diese Katalysatoren ruhen, bis die Reaktionsmischung eine bestimmte Temperatur erreicht. Oberhalb dieser Temperatur sind sie dann aktiv. Diese latenten Katalysatoren ermöglichen lange Topfzeiten und schnelle Entformungszeiten.

Die bis heute bekannteste und gegebenenfalls verwendete Klasse an latenten Katalysatoren besteht aus Quecksilberverbindungen. Der prominenteste Vertreter ist hierbei das Phenylquecksilberneodecanoat (Thorcat 535 und Cucore 44). Dieser Katalysator besitzt ein latentes Reaktionsprofil, wobei der Katalysator anfangs nahezu inaktiv ist und erst nach langsamer Erwärmung der Mischung, meist aufgrund der Exothermie der unkatalysierten Umsetzung von NCO- mit OH-Gruppen, bei einer bestimmten Temperatur (meist um die 70°C) schlagartig aktiv wird. Bei dem Einsatz dieses Katalysators können sehr lange Topfzeiten bei sehr kurzen Aushärtezeiten erreicht werden. Dies ist besonders dann von Vorteil, wenn es sehr viel Material ausgetragen werden muss (zum Beispiel eine große Form gefüllt werden muss) und nach erfolgter Austragung die Reaktion schnell und damit wirtschaftlich beendet werden soll.

Besonders vorteilhaft beim Einsatz von latenten Katalysatoren ist, wenn zudem folgende Bedingungen erfüllt sind:
(a) eine Erhöhung der Katalysatormenge beschleunigt die Reaktion, ohne dass der Katalysator die Latenz verliert.
(b) eine Erniedrigung der Katalysatormenge verlangsamt die Reaktion, ohne dass der Katalysator die Latenz verliert.
(c) Eine Variation der Katalysatormenge, der Kennzahl des Mischungsverhältnisses, der Ausstoßmenge und/oder des Hartsegmentanteils im Polyurethan beeinträchtigt nicht die Latenz des Katalysators.
(d) Bei allen vorgenannten Variationen sorgt der Katalysator für eine nahezu vollständige Umsetzung der Reaktanden, ohne dass klebrige Stellen zurückbleiben.

Ein besonderer Vorteil von latenten Katalysatoren ist darin zu sehen, dass sie im fertigen Polyurethan-Werkstoff infolge ihrer mit sinkender Temperatur abnehmenden katalytischen Wirkung die Spaltung von Urethangruppen, zum Beispiel bei Raumtemperatur, im Vergleich zu konventionellen Katalysatoren nur wenig beschleunigen. Sie tragen damit zu günstigen Dauergebrauchseigenschaften der Polyurethane bei.

Darüber hinaus ist beim Einsatz von Katalysatoren allgemein darauf zu achten, dass die physikalischen Eigenschaften der Produkte möglichst nicht negativ beeinflusst werden. Dies ist auch der Grund, warum eine gezielte Katalyse einer bestimmten Reaktion so wichtig ist. Gerade bei der Herstellung von Elastomeren, insbesondere von Gießelastomeren ist der Einsatz von Quecksilberkatalysatoren sehr stark verbreitet, da diese breit einsetzbar sind, nicht mit zusätzlichen Katalysatoren kombiniert werden müssen und sehr gezielt die Reaktion zwischen OH- und NCO-Gruppen katalysieren. Einziger - dafür aber gravierender Nachteil - ist die hohe Toxizität der Quecksilberverbindungen, so dass große Anstrengungen unternommen werden, Alternativen für diese zu finden.

Ein Überblick über den Stand der Technik wird beispielsweise in der WO 2005/058996 A1 gegeben. Hier wird beschrieben, wie mit Titan- und Zirkoniumkatalysatoren gearbeitet wird. Es werden auch zahlreiche Kombinationsmöglichkeiten verschiedener Katalysatoren erwähnt.

Systeme, die zumindest weniger toxisch als Quecksilberkatalysatoren sind, beispielsweise auf Basis von Zinn, Zink, Bismuth, Titan oder Zirkonium, aber auch Amidin- und Aminkatalysatoren, sind am Markt bekannt, weisen bis heute jedoch nicht die Robustheit und Einfachheit in der Handhabung der Quecksilberverbindungen auf.

Bestimmte Kombinationen von Katalysatoren bewirken, dass die Gelreaktion weitgehend von der Auswertungsreaktion getrennt erfolgt, da viele dieser Katalysatoren nur selektiv wirken. Beispielsweise wird Bismuth(III)-neodecanoat mit Zinkneodecanoat und Neodecansäure kombiniert. Oft wird noch zusätzlich 1,8-Diazabicyclo[5.4.0]undec-7-en zugegeben. Obwohl diese Kombination zu den bekanntesten gehört, ist sie leider nicht so breit und universell einsetzbar, wie zum Beispiel Thorcat 535 (Firma Thor Especialidades S.A.) und ist darüber hinaus anfällig bei Rezepturschwankungen. Die Verwendung dieser Katalysatoren ist beispielsweise in der DE 10 2004 011 3481 A1 beschrieben.

Bei dem am Markt erhältlichen Produkt DABCO DC-2 der Firma Air Products Chemicals Europe B.V. handelt es sich um eine Katalysatormischung aus 1,4-Diazabicyclo[2.2.2]octan (DABCO) und Dibutylzinndiacetat. Der Nachteil dieser Mischung ist, dass das Amin unmittelbar aktivierend wirkt. Alternative Systeme sind beispielsweise Polycat SA-1/10 (Firma Air Products Chemicals Europe B.V.). Hierbei handelt es sich um mit Säure blockiertes DABCO. Obwohl dieses System thermolatent ist, werden derartige Systeme wegen ihrer schlechten katalytischen Wirkung bei der Ausfertigung nicht verwendet. Die in Gegenwart dieser Systeme hergestellten Elastomere bleiben am Ende der Reaktion klebrig; man spricht auch vom "Verhungern" der Reaktion.

Aufgabe der vorliegenden Erfindung ist es, ein Verfahren zur Herstellung von Katalysatoren zur Verfügung zu stellen, mithilfe dessen Katalysatoren erhalten werden können, die es ermöglichen, Polyisocyanat-Polyadditionsprodukte, Polyester oder Polysiloxane mit guten mechanischen Eigenschaften herzustellen. Die nach dem erfindungsgemäßen Verfahren hergestellten Katalysatoren sollen zudem frei von toxischen Schwermetallen, wie Cadmium, Quecksilber und Blei, sein und selbst ein geringeres Potential in sich tragen.

Diese Aufgabe löst die vorliegende Erfindung durch ein Verfahren zur Herstellung von Metallverbindungen der allgemeinen Formeln (I) oder (II) oder (III). Bei den Metallverbindungen der allgemeinen Formel (I) handelt es sich um einkernige Metallverbindungen von Metallen der Oxidationsstufe (IV) mit mindestens einem über wenigstens ein Sauerstoff- oder Schwefelatom gebundenen, wenigstens einen Stickstoff enthaltenden Liganden

[(L¹)ₙ₁(L²)ₙ₂(L³)ₙ₃(L⁴)ₙ₄(M)(IV)] (I)

worin:
M = Sn, Ti, Zr oder Hf ist,
n1, n2, n3, n4 gleich 0 oder 1 und L¹, L², L³, L⁴ ein-, zwei-, drei- oder vierbindige Liganden sind, wobei mindestens ein Ligand je M folgende Bedeutung hat:
   -X-Y
mit X = O, S, OC(O), OC(S), O(O)S(O), O(O)S(O)
   Y = -R¹-N(R²)(R³) oder -R¹-C(R⁴)=NR²,
wobei R¹, R², R³, R⁴ unabhängig voneinander gesättigte oder ungesättigte, cyclische oder acyclische, verzweigte oder unverzweigte, substituierte oder unsubstituierte, gegebenenfalls durch Heteroatome unterbrochene Kohlenwasserstoffreste oder R², R³, R⁴ unabhängig voneinander Wasserstoff, R¹-X sind oder R² und R³ oder R² und R¹ oder R³ und R¹ oder R⁴ und R¹ oder R⁴ und R² einen Ring bilden,
wobei die übrigen Liganden unabhängig voneinander -X-Y mit der vorgenannten Bedeutung sind oder die folgende Bedeutung haben:
   gesättigte oder ungesättigte, cyclische oder acyclische, verzweigte oder unverzweigte, substituierte oder unsubstituierte, gegebenenfalls durch Heteroatome unterbrochene Kohlenwasserstoffreste, Halogenide, Hydroxid, Amidreste, Sauerstoff, Schwefel, R² oder XR², besonders bevorzugt Sauerstoff, Schwefel, Alkoholate, Thiolate oder Carboxylate.

Bei den Metallverbindungen der allgemeinen Formel (II) handelt es sich um zweikernige Metallverbindungen von Metallen der Oxidationsstufe (IV) mit mindestens einem über wenigstens ein Sauerstoff- oder Schwefelatom gebundenen, wenigstens einen Stickstoff enthaltenden Liganden je Metallatom

[(L¹)ₙ₁(L²)ₙ₂(L³)ₙ₃(M)(IV)]₂O (II)

worin
M = Sn, Ti, Zr oder Hf ist,
n1, n2, n3 gleich 0 oder 1, und L¹, L², L³ ein-, zwei-, dreibindige Liganden sind, wobei mindestens ein Ligand je Metallatom die folgende Bedeutung hat:
   -X-Y
mit X = O, S, OC(O), OC(S), O(O)S(O), O(O)S(O),
   Y = R¹-N(R²)(R³) oder -R¹-C(R⁴)=NR²,
wobei R¹, R², R³, R⁴ unabhängig voneinander gesättigte oder ungesättigte, cyclische oder acyclische, verzweigte oder unverzweigte, substituierte oder unsubstituierte, gegebenenfalls durch Heteroatome unterbrochene Kohlenwasserstoffreste oder R², R³, R⁴ unabhängig voneinander Wasserstoff, R¹-X sind oder R² und R³ oder R² und R¹ oder R³ und R¹ oder R⁴ und R¹ oder R⁴ und R² einen Ring bilden, wobei die übrigen Liganden unabhängig voneinander -X-Y mit der vorgenannten Bedeutung sind und die folgende Bedeutung haben:
   gesättigte oder ungesättigte, cyclische oder acyclische, verzweigte oder unverzweigte, substituierte oder unsubstituierte, gegebenenfalls durch Heteroatome unterbrochene Kohlenwasserstoffreste, Halogenide, Hydroxid, Amidreste, Sauerstoff, Schwefel, R² oder XR², besonders bevorzugt Sauerstoff, Schwefel, Alkoholate, Thiolate oder Carboxylate.

Bei den Metallverbindungen der allgemeinen Formel (III) handelt es sich um zwei- oder mehrkernige vierwertige Metallverbindungen von Metallen der Oxidationsstufe (IV) mit mindestens einem über wenigstens ein Sauerstoff- oder Schwefelatom gebundenen wenigstens einen Stickstoff enthaltenden Liganden je Metallatom

[(L¹)ₙ₁(L²)ₙ₂(M)(IV)]ₙ (III)

wobei
M = Sn, Ti, Zr oder Hf ist,
n1, n2 gleich 0 oder 1, n größer oder gleich 2 und L¹, L² ein-, zweibindige Liganden sind, wobei mindestens ein Ligand je M-Atom folgende Bedeutung hat:
   -X-Y
mit X = O, S, OC(O), OC(S), O(O)S(O), O(O)S(O)
   Y = R¹-N(R²)(R³) oder -R¹-C(R⁴)=NR²,
wobei -R¹, R², R³, R⁴ unabhängig voneinander gesättigte oder ungesättigte, cyclische oder acyclische, verzweigte oder unverzweigte, substituierte oder unsubstituierte, gegebenenfalls durch Heteroatome unterbrochene Kohlenwasserstoffreste oder R², R³, R⁴ unabhängig voneinander Wasserstoff, R¹-X sind oder R² und R³ oder R² und R¹ oder R³ und R¹ oder R⁴ und R¹ oder R⁴ und R² einen Ring bilden, wobei die übrigen Liganden unabhängig voneinander -X-Y mit der vorgenannten Bedeutung sind und die folgende Bedeutung haben:
   gesättigte oder ungesättigte, cyclische oder acyclische, verzweigte oder unverzweigte, substituierte oder unsubstituierte, gegebenenfalls durch Heteroatome unterbrochene Kohlenwasserstoffreste, Halogenide, Hydroxid, Amidreste, Sauerstoff, Schwefel, R² oder XR², besonders bevorzugt Sauerstoff, Schwefel, Alkoholate, Thiolate oder Carboxylate.

"Kohlenwasserstoffreste" oder "Alkyl" bedeutet im Rahmen der vorliegenden Erfindung allgemein bevorzugt eine gesättigte aliphatische Kohlenwasserstoffgruppe, die geradkettig oder verzweigt sein kann und von 1 bis 30 Kohlenstoffatome in der Kette haben kann. Bevorzugte Alkylgruppen können geradkettig oder verzweigt sein und von 1 bis zu 12 Kohlenstoffatome in der Kette aufweisen. Verzweigt bedeutet, dass eine NiederAlkylgruppe mit 1 bis 7 Kohlenstoffatomen, wie Methyl, Ethyl oder Propyl, an eine lineare Alkylkette angebracht ist. Bei Kohlenwasserstoffrest bzw. Alkyl handelt es sich beispielsweise um Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 2-Ethylhexyl, 1-Nonyl, 1-Decyl, 1-Undecyl, 1-Dodecyl, 1-Tetradecyl, 1-Hexadecyl und 1-Octadecyl.

Analoge Bevorzugungen gelten, soweit chemisch möglich, für Kohlenwasserstoffreste, die Alkylen, Alkenyl, Alkenylen, Alkinyl, Alkinylen, Cycloalkyl, Cycloalkylen, Cycloalkenyl oder Cycloalkenylen bedeuten.

"Substituiertes Alkyl" bedeutet vorzugsweise, dass die Alkylgruppe mit einem oder mehreren Substituenten ausgewählt aus Alkyl, gegebenenfalls substituiertem Aryl, gegebenenfalls substituiertem Aralkyl, Alkoxy, Nitro, Carboalkoxy, Cyano, Halo, Alkylmercaptyl, Trihaloalkyl oder Carboxyalkyl substituiert ist. Analoges gilt für die anderen möglichen Kohlenwasserstoffreste.

"Cycloalkyl" bedeutet einen aliphatischen Ring, der von 3 bis ungefähr 10 Kohlenstoffatome in dem Ring hat. Bevorzugte Cycloalkylgruppen haben von 4 bis ungefähr 7 Kohlenstoffatome in dem Ring.

"Alkoxy" bedeutet eine Alkyl-O-Gruppe, in der "Alkyl" die vorstehend beschriebene Bedeutung hat. Nieder-Alkoxy-Gruppen sind bevorzugt. Als beispielhafte Gruppen sind Methoxy, Ethoxy, n-Propoxy, i-Propoxy, s-Butoxy, t-Butoxy und n-Butoxy einbezogen.

"Nieder-Alkyl" bedeutet eine Alkylgruppe, die 1 bis ungefähr 7 Kohlenstoffatome aufweist.

"Alkoxyalkyl" bedeutet eine Alkylgruppe wie vorstehend beschrieben, die mit einer Alkoxygruppe, wie vorstehend beschrieben, substituiert ist.

"Halogen" (oder "halo") bedeutet Chlor (chloro), Fluor (fluoro), Brom (bromo) oder Iod (iodo).

Das erfindungsgemäße Verfahren zur Herstellung der Metallverbindungen gemäß der allgemeinen Formel (I) oder (II) oder (III), wie vorstehend definiert, umfasst die Schritte
(a) Bereitstellen einer Verbindung der Formel ML₄, wobei L unabhängig voneinander R, OR oder Hal ist, wobei R = C₁ bis C₈-Alkyl, Hal = Cl, Br oder I und M = Sn, Ti, Zr oder Hf ist, und
(b) Umsetzen der in Verfahrensschritt (a) bereitgestellten Verbindung(en) mit mindestens einer Verbindung der Formel H-X-Y und/oder M¹-X-Y,
wobei X und Y die vorgenannte Bedeutung haben, und M¹ gleich Li, Na, K, Ca, Mg oder NH₄⁺ ist, vorzugsweise in mindestens einem Lösungsmittel.

Das erfindungsgemäße Verfahren kennzeichnet sich dadurch, dass die Umsetzung in Verfahrensschritt (b) in Gegenwart einer oder mehrerer Verbindungen ausgewählt aus NH₃, primären-, sekundären-, tertiären Aminen, M²OH und M²O-R⁵, wobei R⁵ ein Kohlenwasserstoffrest mit 1 bis 6 Kohlenstoffatomen und M² Li⁺, Na⁺, K⁺, Ca2⁺ oder Mg²⁺ sind, durchgeführt wird.

Gemäß einer bevorzugten Ausführungsform der Erfindung wird die Umsetzung in Verfahrensschritt (b) in Gegenwart einer oder mehrer Verbindungen ausgewählt aus NH₃, 1,4-Diazabicyclo[2.2.2]octan-1,8-Diazabicyclo[5 .4.0]non-5-en, Triethylamin, Triethyldiamin, N-Methylimidazol, N,N-Dimethylethanolamin, N-Methylmorpholin, N-Ethylmorpholin, 2,2-Dimorpholinodiethylether, Bis-(2-dimethylaminoethyl-)ether, N-Benzyldimethylamin, N,N'-Dimethylcyclohexylamin, M²OH und M²O-R⁵, wobei R⁵ ein Kohlenwasserstoffrest mit 1 bis 4 C-Atomen und M² Li⁺, Na⁺, K⁺, Ca²⁺ oder Mg²⁺ sind, durchgeführt.

Gemäß einer bevorzugten Ausführungsform der Erfindung ist die Verbindung, in deren Anwesenheit die Umsetzung in Verfahrensschritt (b) vorgenommen wird ausgewählt aus der Gruppe NH₃, NaOC₂H₅, KOC₂H₅, NaOCH₃ (Natriummethylat) und KOCH₃. Gemäß einer besonders bevorzugten Ausführungsform der Erfindung ist die Verbindung NaOCH₃ oder KOCH₃.

Bei der Verbindung der Formel ML₄, die in Verfahrensschritt (a) bereitgestellt wird, handelt es sich besonders bevorzugt um SnCl₄.

Die Menge der vorstehend definierten Verbindungen, in deren Gegenwart Verfahrensschritt (b) durchgeführt, kann über weite Bereiche variieren und beträgt allgemein 0,7 bis 1,3 zu 1, bevorzugt 0,9 bis 1,1 zu 1, bezogen auf das molare Verhältnis der Verbindung zu dem Metall. Besonders bevorzugt wird die vorstehend definierte Verbindung, in deren Gegenwart Verfahrensschritt (b) durchgeführt wird in äquimolarer Menge zu dem Metall eingesetzt.

Das erfindungsgemäße Verfahren gestattet es, die Metallverbindungen gemäß der allgemeinen Formel (I) oder (II) oder (III) in hoher Reinheit, beispielsweise mit geringen Eduktverunreinigungen, wie Chloridanteilen, und in hoher Ausbeute herzustellen. Insbesondere bei der Herstellung von Metallverbindungen der allgemeinen Formel (I) gelingt dabei die Herstellung der Zielstruktur mit geringem Anteil an Dimeren- bzw. Oligomeren Nebenprodukten. Die erreichten Ausbeuten, beispielsweise im Falle der Herstellung von Zinnmetallverbindungen liegen dabei im Bereich > 97%, bezogen auf das eingesetzt Zinn. Die nach dem erfindungsgemäßen Verfahren hergestellten Metallverbindungen sind farblos bis gelblich, transparent und über mehrere Monate lagerstabil.

Gemäß der Erfindung ist es von Vorteil, wenn das erfindungsgemäße Verfahren bei der Herstellung von Metallverbindungen gemäß der allgemeinen Formel (I) mit wasserfreien Rohrstoffen durchgeführt wird, deren Gehalt an Wasser < 0,1 Gew.-% beträgt. Ferner bevorzugt wird die Umsetzung in Verfahrensschritt (b) unter Inertgasatmosphäre, bevorzugt unter Stickstoffatmosphäre, besonders bevorzugt unter trockener Stickstoffatmosphäre durchgeführt.

Das Metall der Metallverbindungen gemäß der allgemeinen Formel (I) oder (II) oder (III) ist allgemein ausgewählt aus der Gruppe Zinn, Titan, Zirkonium und Hafnium, wobei alle der vorstehend genannten Metalle in der Oxidationsstufe +IV vorliegen. Gemäß einer bevorzugten Ausführungsform der Erfindung ist das Metall Zinn oder Titan, gemäß einer besonders bevorzugten Ausführungsform der Erfindung ist das Metall Zinn.

Bei vom speziellen Liganden unterschiedlichen Liganden (L) handelt es sich um allgemein aus der Metallchemie bekannte Liganden. Diese Liganden können unabhängig voneinander teilweise oder ausschließlich über Kohlenstoff an das entsprechende Metall gebunden sein (organische Metallverbindungen/Metallorganyle). Die direkt an das Metall gebundenen Kohlenwasserstoffreste sind bevorzugt gesättigte Alkylreste mit 1 bis 30 Kohlenstoffatomen, besonders bevorzugt mit 1 bis 8 Kohlenstoffatomen. Die Liganden können unabhängig voneinander auch ausschließlich über nicht-Kohlenstoffatome an das Metall gebunden sein (anorganische Metallverbindungen). Die anorganischen Metallverbindungen - also Metallverbindungen ohne Metall-Kohlenstoffbindungen - sind aufgrund ihrer geringen Toxizität bevorzugt.

Bevorzugt handelt es sich bei den vom speziellen Liganden unterschiedlichen Liganden um Sauerstoffbrücken, Hydroxid, Alkoholate, Sulfonate, Phosphonate, Carboxylate, Thiolate (jeweils bevorzugt mit 1 bis 30 Kohlenstoffatomen, besonders bevorzugt mit 1 bis 12 Kohlenstoffatomen) und Halogenide (bevorzugt Chlorid und Bromid), besonders bevorzugt erfolgt die Bindung der Liganden zum Metall über Sauerstoff, zum Beispiel als Sauerstoffbrücke, als Hydroxid oder in Form einer Alkoxygruppe (Alkoholat) oder als Carboxylat.

Bevorzugte Alkoholat-Liganden sind MeO-, EtO-, PrO-, iPrO-, BuO-, tBuO-, iBuO-, PhO- und: 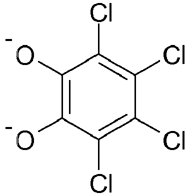 Me = Methyl-, Et = Ethyl-, Pr = Propyl-, iPr = Isopropyl-, Bu = n-Butyl-, tBu = tert.-Butyl-, iBu = iso Butyl-, Ph = Phenylrest.

Bevorzugte Carboxylatliganden sind Formiat, Acetat, Propanoat, Butanoat, Pentanoat, Hexanoat, Neodekanoat, Ethylhexanoat, Laurat, Laktat, Benzoat, sowie ein oder mehrere verschiedene natürliche Fettsäuren, besonders bevorzugt sind Ethylhexanoat, Laurat, Neodekanoat und Benzoat.

Die Metallverbindungen der vorstehend definierten allgemeinen Formeln, insbesondere deren Zinnverbindungen neigen - wie allgemein bekannt ist - zur Oligomerisierung, so dass häufig mehrkernige Metallverbindungen, insbesondere mehrkernige Zinnverbindungen oder Gemische aus ein- und mehrkernigen Metallverbindungen vorliegen. In den mehrkernigen Metallverbindungen sind die Metallatome bevorzugt über Sauerstoffatome miteinander verbunden.

Typische oligomere Komplexe, beispielsweise mehrkernige Zinnverbindungen, entstehen beispielsweise durch Kondensation der Zinnatome über Sauerstoff oder Schwefel, zum Beispiel [OSn(O-R¹-N(R²)-R¹-O)]ₙ mit n > 1. Bei niedrigen Oligomerisierungsraten findet man häufig zyklische, bei höheren Oligomerisierungsraten lineare Oligomere mit OH-Endgruppen.

Bei speziellen Liganden -X-Y bedeutet X vorzugsweise Sauerstoff, Schwefel oder -OC(O)-.

Vorzugsweise handelt es sich bei dem Liganden -X-Y um einen Liganden, bei dem X Schwefel oder Sauerstoff ist und Y -CH₂CH₂N(R)CH₂CH₂S oder -CH₂CH₂N(R)CH₂CH₂O ist, wobei R bevorzugt Me, Et, Bu, tBu, Pr, iPr oder Ph bedeutet.

Ebenso bevorzugt handelt es sich bei dem Liganden -X-Y um einen Liganden, bei dem X -O-C(O)- und Y -CH₂-N(R)CH₂C(O) ist, wobei R bevorzugt Me, Et, Bu, tBu, Pr, iPr, Ph bedeutet.

Bevorzugt als spezieller Ligand ist auch:

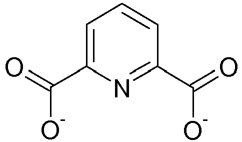

Bevorzugte spezielle Liganden -X-Y sind weiterhin:
Me₂NCH₂CH₂O- , Et₂NCH₂CH₂ O-, Me₂NCH₂CH(Me)O-, Bu₂NCH₂CH₂O-, Me₂NCH₂CH₂O-, PhN(H)CH₂CH₂ O-, PhN(Et)CH₂CH₂O-, HN[CH₂CH₂O-]₂,-OCH₂CH₂N(H)CH₂CH₂CH₂O-, HN[CH₂CH(Me)O-]₂, MeN[CH₂CH₂O-]₂, BuN[CH₂CH₂O-]₂, PhN[CH₂CH₂O-]₂, MeN[CH₂,CH(Me)O-]₂, BuN[CH₂CH(Me)O-]₂, PhN[CH₂CH(Me)O-]₂, N[CH₂CH₂O-]₃, N[CH₂CH(Me)O-]₃,

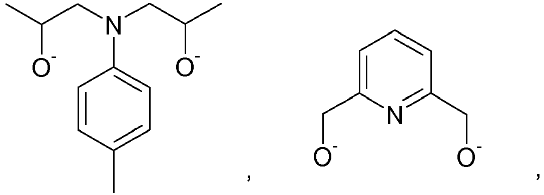

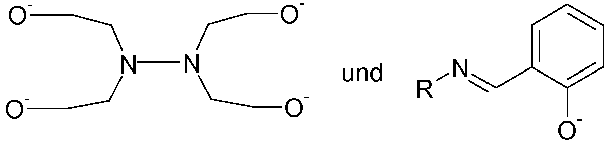

Gemäß einer bevorzugten Ausführungsform betrifft die Erfindung ein Verfahren zur Herstellung einer Zinnverbindung gemäß der Formel (R'O)(R"O)Sn(X-R¹-N-R¹-X, hergestellt mit X = O, S, OC(O), bevorzugt O und OC(O), besonders bevorzugt O, wobei die Reste R' und R" gleich oder verschieden sein können. Die Reste R¹ können unterschiedlich oder gleich sein und haben die oben genannte Bedeutung. Der Rest R² hat die oben genannte Bedeutung. In einer besonders bevorzugten Ausführungsform sind die Reste R' und R" identisch, wie auch die beiden Reste R¹. Bei den Resten R' und R" sowie R² handelt es sich vorzugsweise um Alkylreste. Der Rest R¹ ist bevorzugt -(CH₂)ₙ-, wobei n bevorzugt 2 ist. R² ist vorzugsweise und R' sowie R" Methyl, Butyl, Propyl oder Isopropyl. Anstelle der Reste R'O und R"O können auch Sauerstoffatome stehen, wobei dann eine zweikernige über zwei Sauerstoffbrücken verbundene Zinnverbindung erhalten wird. Dies ist ein Spezialfall der beschriebenen oligomeren Zinn(IV)-Verbindungen [OSn(O-R¹-N(R²)-R¹-O]ₙ mit n >1.

Die folgenden Formeln Ia bis Ij veranschaulichen einige Ausführungsbeispiele der erfindungsgemäß hergestellten Metallverbindungen:

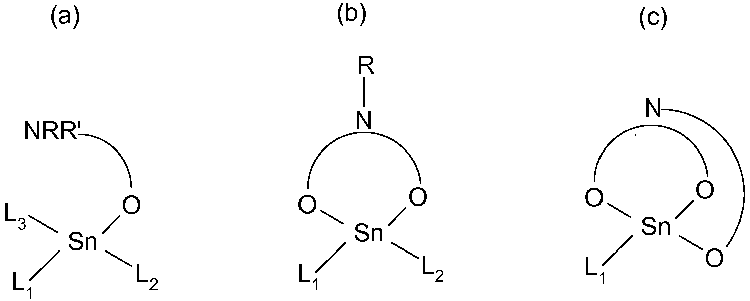

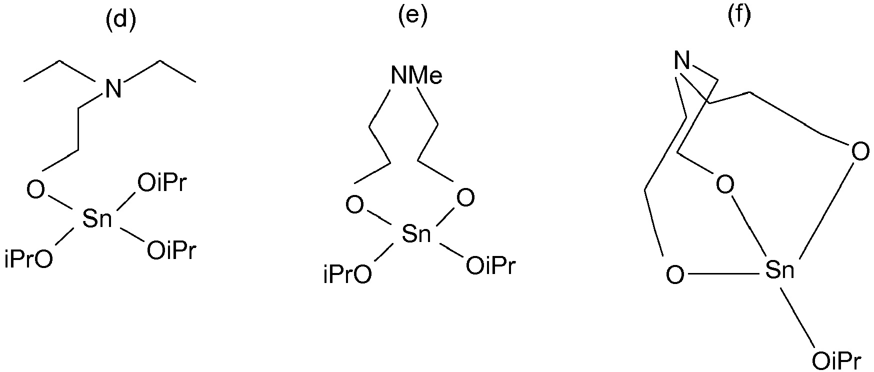

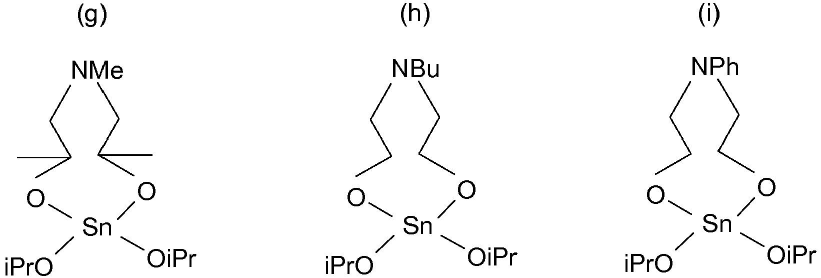

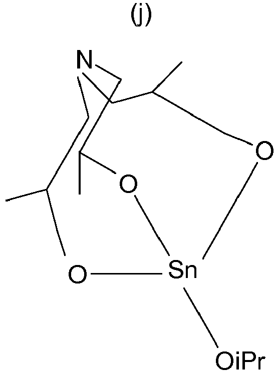

Die Formeln Ik bis In zeigen oligomerisierte (beispielsweise dimerisierte) Verbindungen.

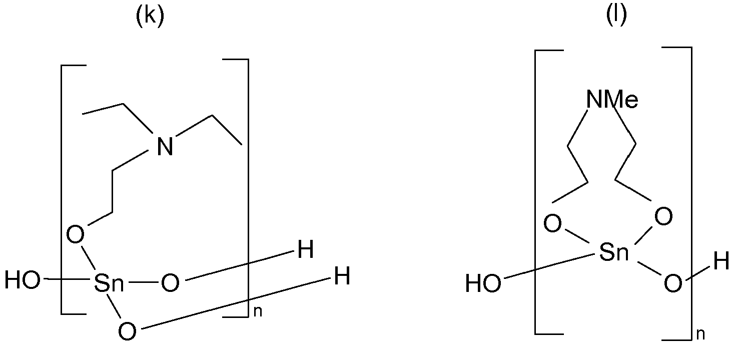

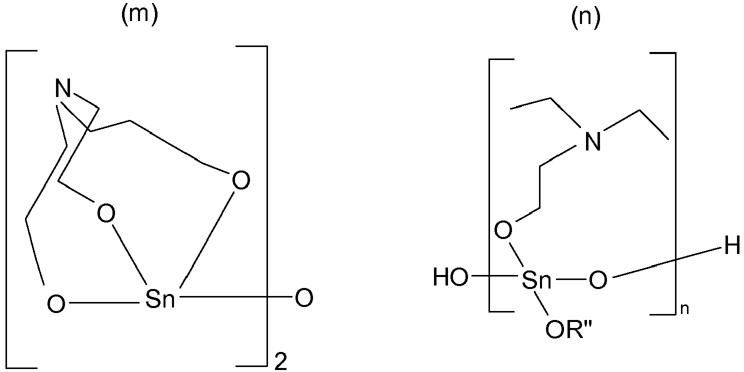

Gemäß einer bevorzugten Ausführungsform der Erfindung wird mit Hilfe des erfindungsgemäßen Verfahrens ein Katalysator gemäß der Formel [(L¹)ₙ₁(Cl)₂(Sn)(IV)], besonders bevorzugt N-Methyldiethanolaminozinndichlorid oder N-Ethyldiethanolaminozinndichlorid hergestellt.

Das stöchiometrische Verhältnis von Metall zu Ligand liegt allgemein im Bereich von 1 : 0,8 bis 1 : 1,2, gemäß einer bevorzugten Ausführungsform wird die mindestens eine Verbindung der Formel HXY und/oder M'XY, die in Verfahrensschritt (b) umgesetzt wird in stöchiometrischer Menge zu dem eingesetzten Metall umgesetzt.

Allgemein wird die Umsetzung des Metallhalogenids mit der mindestens einen Verbindung der Formel -X-HXY und/oder M'XY, wie vorstehend definiert, in mindestens einem Lösungsmittel durchgeführt. Das Lösungsmittel, in dem die Umsetzung in Verfahrensschritt (b) durchgeführt wird, ist allgemein ausgewählt aus der Gruppe der Polyethylenklykole, Polypropylenglykole, Glycerin, Glycerincarbonat, C₁-C₅-Alkohole wie Methanol, Ethanol, n-Propanol, i-Propanol, n-Butanol, iso-Butanol, sek.-Butanol, tert.-Butanol, 1,2-Propandiol, 1,3-Propandiol, Ethylenglykol, Diethylenglykol, 1,2-Propylenglykol, 1,3-Propylenglykol, 1,2-Butandiol, 1,3-Butandiol, 2,3-Butandiol, 1,4-Butandiol, Neopentylglykol, Diethylenglykolmonomethylether und Diethylenglykol. Das Lösungsmittel kann auch ein Gemisch aus zwei, drei, vier oder fünf der vorstehend genannten Lösungsmittel sein. Gemäß einer bevorzugten Ausführungsform der Erfindung wird die Umsetzung in Verfahrensschritt (b) in einem Lösungsmittel durch gemäß der vorstehend definierten Formel H-X-Y durchgeführt.

Allgemein wird die Umsetzung in Verfahrensschritt (b) bei einer Temperatur im Bereich von 40 bis 120 °C, bevorzugt bei einer Temperatur im Bereich von 60 bis 80 °C, durchgeführt. Die Umsetzung wird dabei über einen Zeitraum von etwa 0,5 h bis etwa 3 h durchgeführt. Die erfindungsgemäß hergestellten Metallverbindungen können zur Herstellung von Polyurethanweich- und -hartschäumen, Beschichtungen, Kleb- und Dichtstoffen, halbharten Schäume, Integralschäumen, Sprüh- und Gießelastomeren, thermoplastischen Polyurethanen, Harzen und Bindemitteln verwendet werden. Darüber hinaus können die erfindungsgemäß hergestellten Metallverbindungen zur Herstellung von Polyisocyanaten, Polyadditionsprodukten, zur Durchführung von Veresterungen und Transesterfizierungen, zur Durchführung von Polyadditions- und Polykondensationsreaktionen sowie zur Herstellung von Polyestern und Alkydharzen, sowie zur Härtung von Epoxy- und Silikonmassen verwendet werden.
Die folgenden Beispiele veranschaulichen die Erfindung:

### Beispiele

### Beispiel 1 Herstellung von N-Methyldiethanolaminozinndiisopropanolat

In eine Lösung von 1000 g Zinntetrachlorid in 6650 g Isopropanol wurden ca. 360 g Ammoniak eingeleitet. Anschließend wurde vom Ammoniumchlorid abfiltriert. Es wurde eine ca. 16%ige Lösung von Zinntetraisopropanolat in Isopropanol erhalten. Zu 6208 g dieser Lösung wurden bei einer Temperatur von 70 °C 352 g N-Methyldiethanolamin gegeben und für 1 ½ h bei 70 °C gehalten. Es wurde eine ca. 20%ige Lösung der Zielverbindung in Isopropanol erhalten. Durch Umlösen in 1,4-Butandiol unter Abdestillation von Isopropanol unter Vakuum wurde die 20%ige Anlösung in 1,4-Butandiol erhalten.
Elementaranalyse: Sn = 7,0 % N = 0,8 % Cl < 01 %
119Sn-NMR: 8 - 454ppm

### Beispiel 2 Herstellung von Bis-(N-Methyldiethanolamino)zinn

In eine Lösung von 500 g Zinntetrachlorid in 3110 g Polyethylenglycol wurden 450 g Methyldiethanolamin dosiert. Dann wurden ca. 125 g Ammoniak eingeleitet. Anschließend wird Ammoniumchlorid abfiltriert. Es wurde eine ca. 16%ige Lösung von Bis-(N-Methyldiethanolamino)zinn in Polyethylenglycol erhalten.
Elementaranalyse: Sn = 5,8 % N = 1,3 %
H9Sn-NMR: δ - 450 ppm

### Beispiel 3 Herstellung von N-Methyldiethanolaminozinndichlorid

In 1335 g Lösung nach Verfahrensbeispiel 2 wurden 165 g Zinntetrachlorid zudosiert und anschließend auf 100 °C geheizt und bei dieser Temperatur 2 Stunden gehalten. Es wurden 1500 g einer ca. 26%igen Lösung von N-Methyldiethanolaminozinndichlorid in Polyethylenglycol erhalten, die durch Zugabe von 400 g Polyethylenglycol auf ca. 20 % verdünnt wurde. Die Lösung enthielt neben dem Dichlorid auch nennenswerte Anteile an Mono- bzw. Trichlorid.
Elementaranalyse: Sn = 7,6% N = 0,8% Cl = 4,5 %
119Sn-NMR: δ -494 ppm (Verunreinigungen -490 bzw. -496 ppm)

### Beispiel 4 Herstellung von N-Methyldiethanolaminozinndichlorid

In eine Lösung von 205 g Zinntetrachlorid in 980 g Polyethylenglycol wurden 93,8 g N-Methyldiethanolatttin dosiert und anschließend auf 80 °C geheizt. Dann wurden 283,4 g einer 30%igen methanolischen Lösung von Natriummethylat zudosiert, wobei die Temperatur bei 80°C gehalten wurde. Anschließend wurde noch eine Stunde bei dieser Temperatur gehalten. Dann wurde vom Natriumchloridniederschlag abfiltriert und das Methanol unter Vakuum abdestilliert. Es wurden 1220 g einer ca. 20%igen Lösung von N-Methyldiethanolaminozinndichlorid in Polyethylenglycol erhalten.
Elementaranalyse: Sn = 7,4 % N = 0,9 % Cl = 4,4 %
119Sn-NMR: 8 -494 ppm

### Nicht erfindungsgemäss: Beispiel 5 Herstellung von Diethylenglycolatozinndichlorid

In eine Lösung von 68,3 g Zinntetrachlorid in 635 g Isopropanol wurden 27,8 g Diethylenglycol dosiert und anschließend auf 60 °C geheizt. Dann wurden 94,5 g einer 30%igen methanolischen Lösung von Natriummethylat zudosiert, wobei die Temperatur bei 60 °C gehalten wurde. Anschließend wurde noch eine Stunde bei dieser Temperatur gehalten. Es wurden 795 g einer ca. 10%igen Lösung von Diethylenglycolatozinndichlorid in einer Isopropanol/Methanol-Mischung erhalten.
Elementaranalyse: Sn = 4,1 % N= 2,4 %

### Beispiel 6 Herstellung von N-Methyldiethanolaminozinnchlorid-Dimer

In eine Lösung von 205 g Zinntetrachlorid in 980 g Polyethylenglycol wurden 93,8 g N-Methyldiethanolaminozinnchlorid dosiert. Dann wurden 283,4 g einer 30%igen methanolischen Lösung von Natriummethylat zudosiert, wobei die Temperatur auf ca. 50 °C stieg. Dann wurde auf 60 °C temperiert. Danach wurden 70,9 g einer 10%igen methanolischen Lösung von Wasser zudosiert und anschließend noch eine Stunde bei 60 °C gehalten. Dann wurde vom Natriumchloridniederschlag abfiltriert und das Methanol unter Vakuum abdestilliert. Es wurden 1200 g einer ca. 20%igen Lösung von N-Methyldiethanolaminozinnchlorid-Dimer in Polyethylenglycol erhalten.
Elementaranalyse: Sn = 7,6 % N = 0,9 % Cl = 2,3 %

### Beispiel 7 Herstellung von N-Methyldiethanolaminozinnchlorid-Oligomer

In eine Lösung von 205 g Zinntetrachlorid in 980 g Polyethylenglycol wurden 93,8 g N-Methyldiethanolamin dosiert. Dann werden 283,4 g einer 30%igen methanolischen Lösung von Natriummethylat zudosiert, wobei die Temperatur auf ca. 50°C stieg. Dann wurde auf 60°C temperiert. Danach wurden 83,0 g einer 10%igen methanolischen Lösung von Wasser zudosiert und anschließend noch eine Stunde bei 60°C gehalten. Dann wurde vom Natriumchloridniederschlag abfiltriert und das Methanol unter Vakuum abdestilliert. Es werden 1200g einer ca. 20%igen Lösung von N-Methyldiethanolaminozinnchlorid-Oligomer in Polyethylenglycol erhalten.
Elementaranalyse: Sn = 7,7 % N = 0,9 % Cl = 2,2 %

### Beispiel 8 Herstellung von N-Butyldiethanolaminozinndichlorid

In eine Lösung von 102,5 g Zinntetrachlorid in 500 g Polyethylenglycol wurden 63,4 g N-Butyldiethynolamin dosiert. Anschließend wurden 141,7 g einer 30%igen methanolischen Lösung von Natriummethylat zudosiert, wobei die Temperatur auf 60 °C begrenzt wurde. Anschließend wurde noch eine Stunde bei 60 °C gehalten. Dann wurde vom Natriumchloridniederschlag abgetrennt und das Methanol unter Vakuum abdestilliert. Es wurden 635 g einer ca. 20%igen Lösung von N- Butyldiethanolaminozinndichlorid in Polyethylenglycol erhalten.
Elementaranalyse: Sn = 7,0% Cl=4,5 AZ=48
(AZ bedeutet die Aminzahl, d.h. die Menge KOH in mg, die dem Aminanteil von 1g Substanz entspricht. Die Aminzahl kann nach DIN 53176 bestimmt werden.) 119Sn-NMR: δ -496 ppm

### Beispiel 9 Herstellung von N-p-Toluodiethylanolaminozinnchlorid

In eine Lösung von 102,5 g Zinntetrachlorid in 500 g Polyethylenglycol wurden 76,8 g N-Toluodiethynolamin dosiert. Anschließend wurden 141,7 g einer 30%igen methanolischen Lösung von Natriummethylat zudosiert, wobei die Temperatur auf 60 °C begrenzt wurde. Anschließend wurde noch eine Stunde bei 60 °C gehalten. Dann wurde vom Natriumchloridniederschlag abgetrennt und das Methanol unter Vakuum abdestilliert. Es wurden 650 g einer ca. 20%igen Lösung von N- Toluodiethanolaminozinndichlorid in Polyethylenglycol erhalten.
Elementaranalyse: Sn = 6,9% Cl=4,6 AZ=47

### Anwendungsbeispiel 1

667,4g Sojaöl, 148,8g Pentaerythrit und 0,5g Katalysator nach Verfahrensbeispiel 4 wurden in einem 11 -Vierhalskolben mit Rührer, Temperaturkontrolle, Stickstoffzuführung und Kühler auf 240°C erhitzt. Nach einer Stunde war die Umesterung weitgehend abgeschlossen und es wurde auf 160°C gekühlt. Dann wurden 247 g Phthalsäureanhydrid, 2,4 g Maleinsäureanhydrid und eine ausreichende Menge Xylol als Schleppmittel zugegeben und bei 230°C azeotrop verestert. Nach drei Stunden Reaktionszeit war eine Säurezahl von 5 und eine Viskosität (50%ig in Xylol) von150mPas erreicht.

### Anwendungsbeispiel 2

624g Neopentylglycol, 102g Adipinsäure, 680g Isophthalsäure und 0,8g Katalysatorlösung nach Verfahrensbeispiel 4 wurden in einem 11 -Vierhalskolben mit Rührer, Temperaturkontrolle, Stickstoffzuführung und Kolonne so auf 230°C erhitzt, dass die Kolonnenkopftemperatur 102°C nicht überstieg. Nach sechs Stunden Reaktionszeit war eine Säurezahl von 5 unterschritten.

### Anwendungsbeispiel 3

100g eines Silikonharzes (100%ig, OH-Gehalt 3,5-7,0%, Schmelzpunkt ca. 65°C) wurden mit 2,5g des erfindungsgemäßen Katalysators (lösemittelfrei) intensiv vermischt. Die Mischung wurde in einem Aluminiumschälchen aufgeschmolzen und gleichmäßig mit einer Aufheizgeschwindigkeit von 1 K/ min erhitzt. Die Geliertemperatur wurde mittels Fadenreißens mit 152°C bestimmt. Der erhaltene Prüfkörper war vollvernetzt und gut entformbar.

### Anwendungsbeispiel 4

100g eines Silikonharzes (100%ig, OH-Gehalt 3,5-7,0%, Schmelzpunkt ca. 65°C) wurden ohne Katalysator in einem Aluminiumschälchen aufgeschmolzen und gleichmäßig mit einer Aufheizgeschwindigkeit von 1 K/ min auf 200°C erhitzt und 10 Minuten bei dieser Temperatur getempert. Es konnte keine Vernetzung festgestellt werden. Der erhaltene Prüfkörper war nicht zerstörungsfrei entformbar.

## Patentansprüche

1. Verfahren zur Herstellung von Metallverbindungen der allgemeinen Formel (I), (II) oder (III) mit mindestens einem über wenigstens ein Sauerstoff oder Schwefelatom gebundenen, wenigstens einen Stickstoff enthaltenden Liganden
[(L¹)ₙ₁(L²)ₙ₂(L³)ₙ₃(L⁴)ₙ₄(M)(IV)] (I)
[(L¹)ₙ₁(L²)ₙ₂(L³)ₙ₃(M)(IV)]₂O (II)
[(L¹)ₙ₁(L²)ₙ₂(M)(IV)]ₙ (III)
worin
M = Sn, Ti, Zr oder Hf ist,
n1, n2, n3, n4 0 oder 1 und n größer oder gleich 2 sind,
L¹, L², L³, L⁴ ein-, zwei-, drei- oder vierbindige Liganden sind, wobei mindestens ein Ligand je M folgende Bedeutung hat:
-X-Y
worin X = O, S, OC(O), OC(S), O(O)S(O), O(O)S(O)
Y = -R¹-N(R²)(R³) oder -R¹-C(R⁴)=NR² sind,
worin R¹, R², R³ und R⁴ unabhängig voneinander gesättigte oder ungesättigte, cyclische oder acyclische, verzweigte oder unverzweigte, substituierte oder unsubstituierte, gegebenenfalls durch Heteroatome unterbrochene Kohlenwasserstoffreste oder R², R³, R⁴ unabhängig voneinander Wasserstoff, R¹-X sind oder R³ oder R² und R¹ oder R³ und R¹ oder R⁴ und R¹ oder R⁴ und R² einen Ring bilden, wobei die übrigen Liganden unabhängig voneinander -X-Y mit der vorgenannten Bedeutung sind oder die folgende Bedeutung haben:
gesättigte oder ungesättigte, cyclische oder acyclische, verzweigte oder unverzweigte, substituierte oder unsubstituierte, gegebenenfalls durch Heteroatome unterbrochene Kohlenwasserstoffreste, Halogenide, Hydroxide, Amidreste, Sauerstoff, Schwefel, R² oder XR², sind, umfassend die Schritte
(a) Bereitstellen einer Verbindung der Formel ML₄, wobei L unabhängig voneinander R, OR oder Hal ist, wobei: R = C₁ bis C₈-Alkyl, Hal = Cl, Br oder I und M = Sn, Ti, Zr oder Hf ist, und
(b) Umsetzen der in Verfahrens schritt (a) bereitgestellten Verbindung mit mindestens einer Verbindung der Formel H-X-Y und/oder M¹-X-Y,
wobei X und Y die vorgenannte Bedeutung haben und M¹ = Li, Na, K, Ca, Mg oder NH₄⁺ ist,
**dadurch gekennzeichnet, dass** die Umsetzung in Verfahrensschritt (b) in Gegenwart einer oder mehrer Verbindungen ausgewählt aus NH₃, primären-, sekundären-, tertiären Aminen, M²OH und M²O-R⁵, wobei R⁵ ein Kohlenwasserstoffrest mit 1 bis 6 Kohlenstoffatomen und M² Li⁺, Na⁺, K⁺, Ca2⁺ oder Mg²⁺ ist, durchgeführt wird.

2. Verfahren nach Anspruch 1, **dadurch gekennzeichnet, dass** die Umsetzung in Verfahrensschritt (b) in einem Lösungsmittel ausgewählt aus der Gruppe Polyethylenglycole, Polypropylenglycole, Glycerin, Glycerincarbonat, C₁ bis C₅-Alkohole, 1,2-Propandiol, 1,3-Propandiol, Ethylenglykol, Diethylenglykol, 1,2-Propylenglykol, 1,3-Propylenglykol, 1,2-Butandiol, 1,3-Butandiol, 2,3-Butandiol, 1,4-Butandiol, Neopentylglykol, Diethylenglykolmonomethylether, Lösungsmittel der Formel H-X-Y, gemäß Anspruch 1, Dipropylenglykol und einem Gemisch aus 2, 3, 4 oder 5 der vorstehend genannten Lösungsmittel durchgeführt wird.

3. Verfahren nach Anspruch 1 oder 2, **dadurch gekennzeichnet, dass** die Umsetzung in Verfahrensschritt (b) bei einer Temperatur im Bereich von 40°C bis 120°C über einen Zeitraum von 0,5 Stunden bis 3 Stunden durchgeführt wird.

4. Verfahren nach einem der Ansprüche 1 bis 3, **dadurch gekennzeichnet, dass** die Umsetzung in Verfahrensschritt (b) in Gegenwart einer oder mehrer Verbindungen ausgewählt aus NH₃, 1,4-Diazabicyclo[2.2.2]octan-1,8-Diazabicyclo[5.4.0]non-5-en, Triethylamin, Triethyldiamin, N-Methylimidazol, N,N-Dimethylethanolamin, N-Methylmorpholin, N-Ethylmorpholin, 2,2-Dimorpholinodiethylether, Bis-(2-dimethylaminoethyl-)ether, N-Benzyldimethylamin, N,N'-Dimethylcyclohexylamin, M²OH und M²O-R⁵, wobei R⁵ ein Kohlenwasserstoffrest mit 1 bis 4 C-Atomen und M² Li⁺, Na⁺, K⁺, Ca²⁺ oder Mg²⁺ ist, durchgeführt wird.

5. Verfahren nach Anspruch 4, **dadurch gekennzeichnet, dass** die Umsetzung in Verfahrensschritt (b) in Gegenwart von NH₃, NaOCH₃, NaOC₂H₅, KOCH₃ oder KOC₂H₅ durchgeführt wird.

6. Verfahren nach Anspruch 5, **dadurch gekennzeichnet, dass** die Umsetzung in Verfahrensschritt (b) in Gegenwart von NaOCH₃ oder NH₃ durchgeführt wird

7. Verfahren nach einem der Ansprüche 1 bis 6, **dadurch gekennzeichnet, dass** die mindestens eine Verbindung der der Formel H-X-Y ausgewählt ist aus der Gruppe bestehend aus N-Methyldiethanolamin, N-Ethyldiethanolamin und Triethanolamin.

8. Verfahren nach einem der Ansprüche 1 bis 7, **dadurch gekennzeichnet, dass** das molare Verhältnis von Metall in der Verbindung ML4 in Schritt (a) zu der mindestens einen Verbindung aus der Gruppe bestehend aus NH₃, primären-, sekundären-, tertiären Aminen, M₂OH und M₂OR 1 : 0,7-1,3 beträgt.

9. Verfahren nach einem der Ansprüche 1 bis 8, **dadurch gekennzeichnet, dass** das stöchiometrische Verhältnis von Metall (M) zu Ligand XY 1 : 0,8-1,2 beträgt.

10. Verfahren nach einem der Ansprüche 1 bis 9, **dadurch gekennzeichnet, dass** M in den Formeln (I)-(III) Sn bedeutet.

11. Verfahren nach Anspruch 10, **dadurch gekennzeichnet, dass** als Verbindung M(Hal)₄ in Verfahrensschritt (a) Sn(Cl)₄ bereitgestellt wird.

12. Verfahren nach einem der Ansprüche 10 oder 11, **dadurch gekennzeichnet, dass** eine Metallverbindung der allgemeinen Formel [(L¹)ₙ₁(L²)ₙ₂(Cl)₂(Sn)(IV)] hergestellt wird.

## Claims

1. A process for preparing metal compounds of the general formula (I), (II) or (III) with at least one ligand containing at least one nitrogen and bonded via at least one oxygen or sulfur atom
[(L¹)ₙ₁(L²)ₙ₂(L³)ₙ₃(L⁴)ₙ₄(M)(IV)] (I)
[(L¹)ₙ₁(L²)ₙ₂(L³)ₙ₃(M)(IV)]₂O (II)
[(L¹)ₙ₁(L²)ₙ₂(M)(IV)]ₙ (III)
in which
M = Sn, Ti, Zr or Hf,
n1, n2, n3, n4 are each 0 or 1 and n is greater than or equal to 2,
L¹, L², L³, L⁴ are each mono-, di-, tri- or tetravalent ligands, where at least one ligand per M is defined as follows:
-X-Y
in which X = O, S, OC(O), OC(S), O(O)S(O), O(O)S(O)
Y = -R¹-N(R²)(R³) or -R¹-C(R⁴)=NR²,
in which R¹, R², R³ and R⁴ are each independently saturated or unsaturated, cyclic or acyclic, branched or unbranched, substituted or unsubstituted hydrocarbyl radicals optionally interrupted by heteroatoms, or R², R³, R⁴ are each independently hydrogen, R¹-X, or R³ or R² and R¹ or R³ and R¹ or R⁴ and R¹ or R⁴ and R² form a ring, where the remaining ligands are each independently -X-Y as defined above or are defined as follows:
saturated or unsaturated, cyclic or acyclic, branched or unbranched, substituted or unsubstituted hydrocarbyl radicals optionally interrupted by heteroatoms, or halides, hydroxides, amide radicals, oxygen, sulfur, R² or XR², comprising the steps of
(a) providing a compound of the formula ML₄ where L is independently R, OR or Hal, where: R = C₁ to C₈-alkyl, Hal = Cl, Br or I and M = Sn, Ti, Zr or Hf, and
(b) reacting the compound provided in process step (a) with at least one compound of the formula H-X-Y and/or M¹-X-Y,
where X and Y are each as defined above and M¹ = Li, Na, K, Ca, Mg or NH₄⁺,
**characterized in that** the reaction in process step (b) is performed in the presence of one or more compounds selected from NH₃, primary, secondary and tertiary amines, M²OH and M²O-R⁵, where R⁵ is a hydrocarbyl radical having 1 to 6 carbon atoms and M² is Li⁺, Na⁺, K⁺, Ca²⁺ or Mg²⁺.

2. The process as claimed in claim 1, **characterized in that** the reaction in process step (b) is performed in a solvent selected from the group of polyethylene glycols, polypropylene glycols, glycerol, glyceryl carbonate, C₁ to C₅-alcohols, 1,2-propanediol, 1,3-propanediol, ethylene glycol, diethylene glycol, 1,2-propylene glycol, 1,3-propylene glycol, 1,2-butanediol, 1,3-butanediol, 2,3-butanediol, 1,4-butanediol, neopentyl glycol, diethylene glycol monomethyl ether, solvents of the formula H-X-Y according to claim 1, dipropylene glycol and a mixture of 2, 3, 4 or 5 of the aforementioned solvents.

3. The process as claimed in claim 1 or 2, **characterized in that** the reaction in process step (b) is performed at a temperature in the range from 40°C to 120°C over a period of 0.5 hour to 3 hours.

4. The process as claimed in any of claims 1 to 3, **characterized in that** the reaction in process step (b) is performed in the presence of one or more compounds selected from NH₃, 1,4-diazabicyclo[2.2.2]octane-1,8-diazabicyclo[5.4.0]non-5-ene, triethylamine, triethyldiamine, N-methylimidazole, N,N-dimethylethanolamine, N-methylmorpholine, N-ethylmorpholine, 2,2-dimorpholinodiethyl ether, bis(2-dimethylaminoethyl) ether, N-benzyldimethylamine, N,N'-dimethylcyclohexylamine, M²OH and M²O-R⁵ where R⁵ is a hydrocarbyl radical having 1 to 4 carbon atoms and M² is Li⁺, Na⁺, K⁺, Ca²⁺ or Mg²⁺.

5. The process as claimed in claim 4, **characterized in that** the reaction in process step (b) is performed in the presence of NH₃, NaOCH₃, NaOC₂H₅, KOCH₃ or KOC₂H₅.

6. The process as claimed in claim 5, **characterized in that** the reaction in process step (b) is performed in the presence of NaOCH₃ or NH₃.

7. The process as claimed in any of claims 1 to 6, **characterized in that** the at least one compound of the formula H-X-Y is selected from the group consisting of N-methyldiethanolamine, N-ethyldiethanolamine and triethanolamine.

8. The process as claimed in any of claims 1 to 7, **characterized in that** the molar ratio of metal in the compound ML4 in step (a) to the at least one compound from the group consisting of NH₃, primary, secondary and tertiary amines, M₂OH and M₂OR is 1:0.7-1.3.

9. The process as claimed in any of claims 1 to 8, **characterized in that** the stoichiometric ratio of metal (M) to ligand XY is 1:0.8-1.2.

10. The process as claimed in any of claims 1 to 9, **characterized in that** M in the formulae (I)-(III) is Sn.

11. The process as claimed in claim 10, **characterized in that** the compound M(Hal)₄ provided in process step (a) is Sn(Cl)₄.

12. The process as claimed in either of claims 10 and 11, **characterized in that** a metal compound of the general formula [(L¹)ₙ₁(L²)ₙ₂(Cl)₂(Sn)(IV)] is prepared.

## Revendications

1. Procédé de fabrication de composés métalliques de formule générale (I), (II) ou (III) contenant au moins un ligand contenant au moins un azote relié par au moins un atome d'oxygène ou de soufre
[(L¹)ₙ₁(L²)ₙ₂(L³)ₙ₃(L⁴)ₙ₄(M)(IV)] (I)
[(L¹)ₙ₁(L²)ₙ₂(L³)ₙ₃(M)(IV)]₂O (II)
[(L¹)ₙ₁(L²)ₙ₂(M)(IV)]ₙ (III)
dans lesquelles
M = Sn, Ti, Zr ou Hf,
n1, n2, n3, n4 représentent 0 ou 1 et n est supérieur ou égal à 2,
L¹, L², L³, L⁴ sont des ligands mono-, bi-, tri- ou tétravalents, au moins un ligand par M ayant la signification suivante :
-X-Y
avec
X = O, S, OC(O), OC(S), O(O)S(O), O(O)S(O),
Y = -R¹-N(R²) (R³) ou -R¹-C(R⁴) = NR²,
R¹, R², R³ et R⁴ signifiant indépendamment les uns des autres des radicaux hydrocarbonés saturés ou insaturés, cycliques ou acycliques, ramifiés ou non ramifiés, substitués ou non substitués, éventuellement interrompus par des hétéroatomes, ou R², R³, R⁴ signifiant indépendamment les uns des autres hydrogène, R¹-X, ou R³ ou R² et R¹ ou R³ et R¹ ou R⁴ et R¹ ou R⁴ et R² formant un cycle, les autres ligands signifiant indépendamment les uns des autres -X-Y avec la signification susmentionnée ou ayant la signification suivante :
radicaux hydrocarbonés saturés ou insaturés, cycliques ou acycliques, ramifiés ou non ramifiés, substitués ou non substitués, éventuellement interrompus par des hétéroatomes, halogénures, hydroxydes, radicaux amide, oxygène, soufre, R² ou XR², comprenant les étapes suivantes :
(a) la préparation d'un composé de formule ML₄, les L signifiant indépendamment les uns des autres R, OR ou Hal, avec : R = alkyle en C₁ à C₈, Hal = Cl, Br ou I, et M = Sn, Ti, Zr ou Hf, et
(b) la mise en réaction du composé préparé à l'étape de procédé (a) avec au moins un composé de formule H-X-Y et/ou M¹-X-Y,
X et Y ayant la signification susmentionnée, et M¹ = Li, Na, K, Ca, Mg ou NH₄⁺,
**caractérisé en ce que** la réaction à l'étape de procédé (b) est réalisée en présence d'un ou de plusieurs composés choisis parmi NH₃, les amines primaires, secondaires, tertiaires, M²OH et M²O-R⁵, R⁵ étant un radical hydrocarboné de 1 à 6 atomes de carbone et M² signifiant Li⁺, Na⁺, K⁺, Ca²⁺ ou Mg²⁺.

2. Procédé selon la revendication 1, **caractérisé en ce que** la réaction à l'étape de procédé (b) est réalisée dans un solvant choisi dans le groupe constitué par les polyéthylène glycols, les polypropylène glycols, la glycérine, le carbonate de glycérine, les alcools en C₁ à C₅, le 1,2-propanediol, le 1,3-propanediol, l'éthylène glycol, le diéthylène glycol, le 1,2-propylène glycol, le 1,3-propylène glycol, le 1,2-butanediol, le 1,3-butanediol, le 2,3-butanediol, le 1,4-butanediol, le néopentylglycol, l'éther monométhylique de diéthylène glycol, les solvants de formule H-X-Y selon la revendication 1, le dipropylène glycol et un mélange de 2, 3, 4 ou 5 des solvants mentionnés précédemment.

3. Procédé selon la revendication 1 ou 2, **caractérisé en ce que** la réaction à l'étape de procédé (b) est réalisée à une température dans la plage allant de 40 °C à 120 °C pendant une durée de 0,5 heure à 3 heures.

4. Procédé selon l'une quelconque des revendications 1 à 3, **caractérisé en ce que** la réaction à l'étape de procédé (b) est réalisée en présence d'un ou de plusieurs composés choisis parmi NH₃, le 1,4-diazabicyclo[2.2.2]octane-1,8-diazabicyclo[5.4.0]non-5-ène, la triéthylamine, la triéthyldiamine, le N-méthylimidazole, la N,N-diméthyléthanolamine, la N-méthylmorpholine, la N-éthylmorpholine, l'éther 2,2-dimorpholinodiéthylique, l'éther bis-(2-diméthylaminoéthylique), la N-benzyldiméthylamine, la N,N'-diméthylcyclohexylamine, M²OH et M²O-R⁵, R⁵ signifiant un radical hydrocarboné de 1 à 4 atomes C et M² signifiant Li⁺, Na⁺, K⁺, Ca²⁺ ou Mg²⁺.

5. Procédé selon la revendication 4, **caractérisé en ce que** la réaction à l'étape de procédé (b) est réalisée en présence de NH₃, NaOCH₃, NaOC₂H₅, KOCH₃ ou KOC₂H₅.

6. Procédé selon la revendication 5, **caractérisé en ce que** la réaction à l'étape de procédé (b) est réalisée en présence de NaOCH₃ ou NH₃.

7. Procédé selon l'une quelconque des revendications 1 à 6, **caractérisé en ce que** ledit au moins un composé de formule H-X-Y est choisi dans le groupe constitué par la N-méthyldiéthanolamine, la N-éthyldiéthanolamine et la triéthanolamine.

8. Procédé selon l'une quelconque des revendications 1 à 7, **caractérisé en ce que** le rapport molaire entre le métal dans le composé ML4 à l'étape (a) et ledit au moins un composé du groupe constitué par NH₃, les amines primaires, secondaires, tertiaires, M₂OH et M₂OR est de 1:0,7 à 1,3.

9. Procédé selon l'une quelconque des revendications 1 à 8, **caractérisé en ce que** le rapport stoechiométrique entre le métal (M) et le ligand XY est de 1:0,8 à 1,2.

10. Procédé selon l'une quelconque des revendications 1 à 9, **caractérisé en ce que** M dans les formules (I) à (III) signifie Sn.

11. Procédé selon la revendication 10, **caractérisé en ce que** Sn(Cl)₄ est préparé en tant que composé M(Hal)₄ à l'étape de procédé (a).

12. Procédé selon l'une quelconque des revendications 10 ou 11, **caractérisé en ce qu'**un composé métallique de formule générale [(L¹)ₙ₁(L²)ₙ₂(Cl)₂(Sn)(IV)] est fabriqué.
